# EUROPEAN PATENT APPLICATION

(11) **EP 1 202 569 A1**
(43) Date of publication of application: **02.05.2002**
(21) Application number: 00204000.4
(22) Date of filing: 14.11.2000
(51) Int. Cl.: H04N 7/14, H04N 7/18, H04N 5/232

(54) **Observation and control system**

(30) Priority: 27.10.2000 DE
(71) Applicant: Euro Properties Comfort S.A., 2324 Luxembourg (LU)
(72) Inventor:
(74) Representative: 't Jong, Bastiaan Jacob

(57) **Abstract**

The invention relates to a system for observing an object via a network, such as the internet, which system comprises:
- observation means connectable to the network for providing observation data and which observation means are arranged on a first location;
- receiving means connectable to the network for receiving the observation data and which receiving means are arranged on a second location, wherein the first location and second location are geographically distanced, and
- control means connectable to the network for controlling the observation means.

## Description

The invention relates to a system for observing an object via a network, such as the internet, which system comprises:
- observation means connectable to the network for providing observation data and which observation means are arranged on a first location;
- receiving means connectable to the network for receiving the observation data and which receiving means are arranged on a second location, wherein the first location and second location are geographically distanced.

It is known to connect a camera to a computer system, which computer system can be connected to the internet. This enables an user to provide images to another internet user, which enables this user to observe an object or to communicate with the first user.

When one wants to guard an object, such as a second house, one could arrange such "webcams" into said house and provide a computer system, which is connected to the internet. However, to properly guard such an object as a house, it is necessary to be able to move the camera to get a proper overview. Furthermore, it would be preferable to be able to zoom the camera onto certain details of the object.

It is an object of the invention to provide an improved system according to the preamble.

This object is achieved by a system, which is characterized by control means connectable to the network for controlling the observation means.

With the control means it becomes possible to control the observation means from a distance. When the observation means comprise for example a camera, the control means could control the camera, such that it can be moved around and that the camera zooms in and out.

The observation means could also comprise a microphone and/or motion detector. The microphone is used to listen from the second location what is happening in or around the object to be observed and a motion detector can give a signal to the receiving means to alert the observer. A glass breakage sensor arranged onto a window could also be provided.

According to a preferred embodiment of the invention the control means comprise means for moving the observation means.

In another preferred embodiment the receiving means comprise display means for displaying the observation data. When a camera is used, the observation data consists of image data providing moving images. Otherwise, if only for example motion detectors are used, the display means could display the status of the motion detectors during a certain period of time.

Another embodiment of the invention comprises actuating means, which are controllable via the network by the control means, for actuating objects on first location from the second location. These actuating means could for example turn on or off the lights in a house, a swimming pool or the heating. With the observation means, it could be observed if the actuating means have actually done their work.

The invention also relates to a method for observing an object on a first location from a second location via a network, which method comprises the steps of:
- connecting receiving means on a second location to the network;
- receiving observation data from observation means connected to the network at the first location;
- displaying the received observation data; and
- controlling the observation means in order to observe the object.

According to a preferred embodiment the method according to the invention comprises the step of controlling actuating means on the first location, in order to actuate an object, which is observable by the observating means.

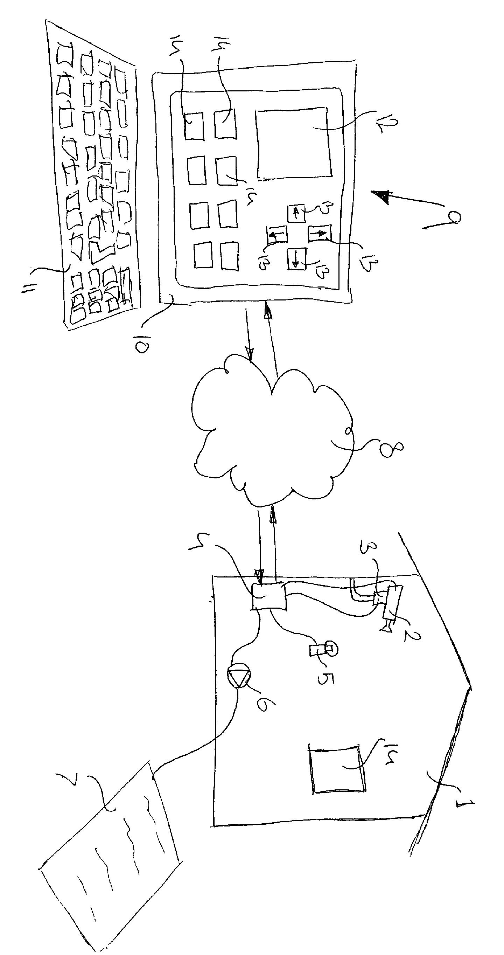

These and other features are described in more detail in conjunction with the accompanying drawing.

In the drawing a house 1 is shown, in which a camera 2 is arranged. This camera 2 is arranged onto a rotation device 3 in order to rotate the camera 2. The camera 2 and the rotation device 3 are connected to a communication device 4, which could be called a property black box. Furthermore, the lights 5 of the house 1 are connected to this communication device and a pump 6 of the pool 7 is also connected thereto.

The communication device 4 or property black box is connected to the internet 8 to be able to change data.

At a second location a computer system 9 is arranged, which computer system 9 has a display 10 and a keyboard 11. On the computer system a software program is running which enables the computer system 9 to receive data from the communication device 4 and to send data to the communication device 4.

At the display of the computer system 9 a window 12 is displayed in which the moving images from the camera 2 are displayed. Next to the window 12 four keys 13 are arranged to control the rotation device 3 via the internet 8 and the communication device 4. This enables a person on the second location to observe an object 14 on the first location.

Furthermore some buttons 15 are displayed, with which devices can be turned on and off, such as the lights 5, a refrigerator, and the pump 6 of the pool 7.

With for example a system as shown in the drawing it is possible to observe a house from a geographically distanced location. This enables an owner at for example the other end of the world to check upon its own house. It is also possible that a security organization takes the burden of observing the house for example every hour of the day. Only when the owner wants to check its house or wants to actuate some devices, he can log on to the internet and make contact with the communication device 4 of the house.

When for example a motion detector is arranged in a house, the motion detector can alert the owner or the security system if motion is detected in the house. Then the security can check via the internet the house and if necessary alert the proper authority.

## Claims

1. System for observing an object via a network, such as the internet, which system comprises:
- observation means connectable to the network for providing observation data and which observation means are arranged on a first location;
- receiving means connectable to the network for receiving the observation data and which receiving means are arranged on a second location, wherein the first location and second location are geographically distanced;
**characterized by**
- control means connectable to the network for controlling the observation means.

2. System according to claim 1, wherein the observation means comprise a camera, a microphone and/or a motion detector.

3. System according to claim 1 or 2, wherein the control means comprise means for moving the observation means.

4. System according to any of the preceding claims, wherein the receiving means comprise display means for displaying the observation data.

5. System according to any of the preceding claims, further comprising actuating means, which are controllable via the network by the control means, for actuating objects on the first location from the second location.

6. Method for observing an object on a first location from a second location via a network, which method comprises the steps of:
- connecting receiving means on a second location to the network;
- receiving observation data from observation means connected to the network at the first location;
- displaying the received observation data; and
- controlling the observation means in order to observe the object.

7. Method according to claim 6, comprising the step of controlling actuating means on the first location, in order to actuate an object, which is observable by the observating means.
